# NOUVEAU FASCICULE DE BREVET EUROPEEN

(11) **EP 1 782 985 B2**
(45) Date de publication et mention de la décision concernant l'opposition: **08.04.2015**
(45) Mention de la délivrance du brevet: 19.05.2010
(21) Numéro de dépôt: 06123638.6
(22) Date de dépôt: 07.11.2006
(51) Int. Cl.: B60J 7/00

(54) **Cadre d'occultation pour pavillon vitré d'un véhicule automobile, et véhicule correspondant**
Abdeckungsmodul für das Glasdach eines Fahrzeuges, und entsprechendes Fahrzeug
Cover module for the glazed roof of a vehicle, and corresponding vehicle

(30) Priorité: 07.11.2005 FR 0511308
(43) Date de publication de la demande: 09.05.2007
(73) Titulaire: Advanced Comfort Systems France SAS - ACS France, 79300 Bressuire (FR)
(72) Inventeur: Fourel, Pascal, 35400, SAINT-MALO (FR)
(74) Mandataire: Vidon Brevets & Stratégie

(56) Documents cités:
- EP-A- 1 449 692
- EP-A1- 0 440 836
- EP-B1- 0 346 157
- EP-B1- 0 346 158
- WO-A-2005/068236
- DE-A1- 10 144 738
- DE-A1- 10 303 770
- DE-C1- 4 326 547
- DE-C2- 3 820 845
- DE-U1- 9 417 148
- DE-U1-202004 018 915
- US-A- 5 186 517

## Description

Le domaine de l'invention est celui des véhicules automobiles, et notamment des véhicules présentant une surface vitrée importante au niveau du pavillon. Plus précisément, l'invention concerne un dispositif d'occultation d'un pavillon vitré selon le préambule de la revendication 1, un procédé de montage d'un tel dispositif, et un véhicule muni d'un tel dispositif. Un dispositif de ce type est connu du document WO 2005/068236 A.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil. On a également proposé des surfaces vitrées multiples, par exemple sous la forme de deux ou trois éléments, dont certains peuvent former toits ouvrants.

On comprend qu'il est alors nécessaire de prévoir des moyens d'occultation, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour les surfaces vitrées horizontales, on connaît également les stores à enrouleur, que l'on peut déployer pour se protéger du soleil. Suivant le document FR 2866276A au nom du même titulaire que la présente demande de brevet, cette technique du store à enrouleur, et plus généralement de tout type de toile d'occultation, est adaptable à des surfaces de grandes tailles et généralement non planes, telles que le sont par exemple les pavillons de véhicules actuels ou futurs qui sont le plus souvent incurvés ou galbés dans le sens de la largeur et également parfois dans le sens de la longueur.

Une technique connue de l'art antérieur propose d'entraîner la toile d'un store à enrouleur au moyen d'une barre de tirage rigide guidée en translation à chacune de ses extrémités dans un rail de guidage. Chacun de ces deux rails est pour cela fixé au châssis, encore appelé carrosserie, de chaque côté de la surface vitrée.

Il est classique de proposer que la barre de tirage d'un store à enrouleur soit manoeuvrée à la main au moyen d'une ou de plusieurs poignées fixées directement sur la barre de tirage. Cette technique s'avère cependant souvent contraignante pour l'utilisateur, qui doit tirer sur la barre de façon homogène et sans à-coup, au risque qu'elle ne se coince en prenant une position légèrement oblique par rapport à la direction transverse à celle des rails.

Il est pour cela préférentiellement proposé une autre technique par entraînement mécanique coordonné des deux extrémités de la barre de tirage, en agissant sur la longueur de deux câbles ou de deux filins identiques reliés chacun à une des extrémités de la barre. Le dispositif mis en oeuvre par cette technique comprend généralement des moyens conventionnels pour pousser et tirer les deux câbles dans des directions opposées autour d'une position moyenne le long d'un chemin de câble de façon à réaliser l'allongement ou réciproquement le raccourcissement d'une longueur identique de câbles entre l'extrémité du câble lié à la barre et la position moyenne. Ces câbles sont par ailleurs communément maintenus sous tension par l'intermédiaire de poulies, placées le long du chemin de câble.

Le dispositif mis en oeuvre par cette technique peut habituellement être manoeuvré au moyen d'une manivelle, ou bien actionné par un moteur électrique commandé par pression sur un bouton-poussoir.

Il apparaît toutefois que les opérations de fixation et d'assemblage des différents éléments employés par ces techniques (rails, câbles, store à enrouleur, moteur électrique...) présentent des difficultés, puisqu'il s'agit d'effectuer le montage directement dans l'habitacle du véhicule.

Un autre inconvénient de ces techniques réside dans l'opération, fréquente, d'ajustage de la position et de la disposition des différents éléments de chaque véhicule d'une même série. Cette contrainte provient de la présence souvent inévitable au sein d'une série de véhicules, appartenant à une même chaîne de production, de variations sensibles des dimensions dans l'assemblage des éléments du châssis.

Une autre difficulté de ces techniques est, au moins dans certains cas, le passage des câbles dans des gaines de faibles dimensions.

Il est par ailleurs peu aisé de contrôler le bon fonctionnement du dispositif, en raison des jeux existants dans les véhicules automobiles, ou pouvant apparaître avec les temps.

Ces problèmes sont encore plus sévères lorsque la surface vitrée est importante et que la carrosserie du pavillon est particulièrement bombée.

L'invention a notamment pour objectif de pallier ces inconvénients de l'état de l'art.

Plus précisément, un objectif de l'invention est de fournir une technique d'occultation d'une paroi vitrée du pavillon d'un véhicule automobile mettant en oeuvre un cadre pour store à enrouleur qui soit adapté aux formes de plus en plus complexes des pavillons des véhicules automobiles modernes.

Un second objectif de l'invention est de maintenir efficacement les éléments de déploiement et d'entraînement du store à enrouleur.

Un troisième objectif de l'invention est de proposer un dispositif d'occultation d'une paroi vitrée qui soit d'un seul bloc, pour faciliter son positionnement et sa fixation dans l'habitacle des véhicules automobiles.

Un autre objectif de l'invention est de fournir une telle technique qui permette de réduire la masse du dispositif d'occultation.

L'invention a également pour objectif de fournir une telle technique, qui soit de fabrication aisée, simple à mettre en oeuvre, et peu coûteuse.

Un autre objectif de l'invention est de fournir un tel dispositif, qui soit rigide et permette de réduire des écarts et des jeux entre différents éléments.

Encore un objectif de l'invention est de fournir une telle technique, qui conserve l'ensemble des avantages des stores à enrouleur, et notamment :
- aspect esthétique affleurant ;
- encombrement réduit;
- facilité et coût réduit de fabrication ;

Ces objectifs, ainsi que d'autres qui apparaîtront par la suite, sont atteints à l'aide d'un dispositif d'occultation d'un pavillon vitré d'un véhicule automobile selon la revendication 1.

Ainsi, l'invention propose une solution technique simple et efficace aux divers problèmes relatifs au montage dans l'habitacle d'un véhicule d'un dispositif occultation de surfaces vitrées du pavillon équipé d'un store à enrouleur.

Ainsi les opérations de fixation du cadre, et notamment de vissage à la structure de garniture du pavillon, sont facilitées, le crochet permettant de soutenir le cadre lors de cette opération.

La bague anti-fluage évite les déformations du cadre.

Préférentiellement, le cadre présente au moins un passage de câble d'entraînement actionné par le moteur.

Ainsi il n'est pas obligatoire de prévoir une gaine pour le câble.

Selon un autre aspect préférentiel, le ou les passages comprennent chacun un réceptacle à formes opposées en alternance.

Ainsi le câble peut être inséré dans son passage par pression et il y a diminution des risques de coincer le câble dans les chicanes ou les courbes du passage de câble.

Selon une caractéristique préférentielle de l'invention, le cadre présente deux rails de guidage d'une barre de tirage entraînant la toile du store.

Avantageusement, le cadre est réalisé par moulage.

Le coût de fabrication du cadre peut être ainsi réduit.

De façon avantageuse, le cadre présente au moins une cheminée de réception d'un crochet de clippage d'une pièce d'habillage.

Il est ainsi possible de donner un aspect esthétique extérieur satisfaisant au dispositif d'occultation tout en conservant une accessibilité aux éléments nécessitant un entretien (moteur, ...).

L'invention concerne également un procédé de montage d'un dispositif d'occultation d'un pavillon vitré d'un véhicule automobile selon la revendication 1, comprenant au moins un store à enrouleur entraîné par un moteur électrique, tel qu'il comprend au moins les deux étapes définies dans la revendication 8.

Ainsi, le nombre d'opérations d'assemblage à l'intérieur de l'espace confiné de l'habitacle est limité.

L'invention concerne encore un véhicule automobile à pavillon vitré, comprenant un dispositif d'occultation du pavillon vitré tel que décrit ci-dessus.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 présente le cadre selon l'invention intégrant le store à enrouleur et son moteur électrique;
- les figures 2A et 2B illustrent le système de fixation du cadre à la structure de garnissage du toit dans une vue en perspective respectivement de dessus et de dessous;
- les figures 3A et 3B, sont des vues de détail du montage du store à enrouleur et du système de guidage de la barre de tirage dans les rails formés dans le cadre;
- la figure 4 illustre le système de gainage des câbles intégré au cadre et présente les réservations prévues pour mettre en place le cadre d'habillage.

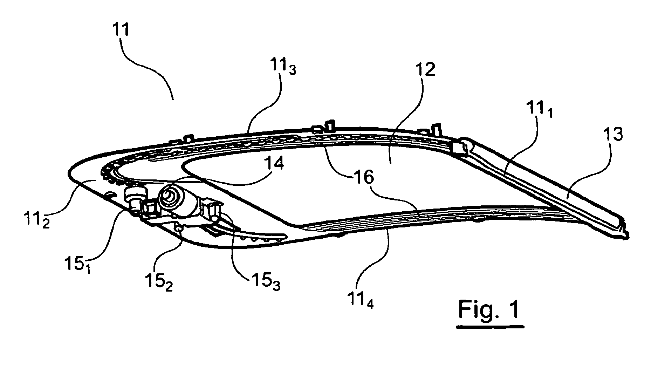

Comme déjà mentionné, le dispositif est avantageusement un store à enrouleur actionné par un moteur électrique. Le mode de réalisation, décrit par la suite, concerne un dispositif comprenant un cadre monobloc 11 réalisé en plastique moulé par injection, ainsi que cela est illustré figure 1.

Le cadre comprend une fenêtre 12 correspondant à la surface de vitrage à occulter. Le store à enrouleur 13 est monté sur un premier côté 11₁ du cadre 11. Il comprend une toile flexible dans laquelle sont glissées des baleines dont les extrémités sont équipées de patins coulissant dans des rails de guidage. Le moteur électrique 14 est fixé sur le côté 11₂ du cadre, opposé au côté 11₁, au moyen de trois inserts métalliques 15₁, 15₂, 15₃. Pour faciliter les opérations de maintenance du moteur électrique, celui-ci est fixé sur la face inférieure du cadre de façon à y accéder directement après avoir retiré le cadre d'habillage du cadre 11. Sur les côtés de plus grande longueur 11₃ et 11₄, des chemins de rail 16 parallèles sont formés dans le cadre 11. Avantageusement le matériau plastique du cadre est de type thermoplastique, tel que du polychlorure de vinyle (PVC) ou du polypropylène renforcé par vingt pourcents de fibre de verre.

L'ensemble ainsi constitué par le dispositif constitue donc un bloc qui peut être pointé par un procédé de soudure TIG (en anglais « Tungsten Inert Gas », pour soudage à l'électrode de tungstène sous gaz inerte), ou encore MIG-MAG (en anglais « Metal Inert gas - Metal Activ gas », pour soudage à l'électrode métallique sous gaz inerte - soudage à l'électrode métallique sous gaz actif), ou tout autre procédé de soudure, à la structure de garniture du pavillon au niveau de pattes de soudure solidaires du cadre.

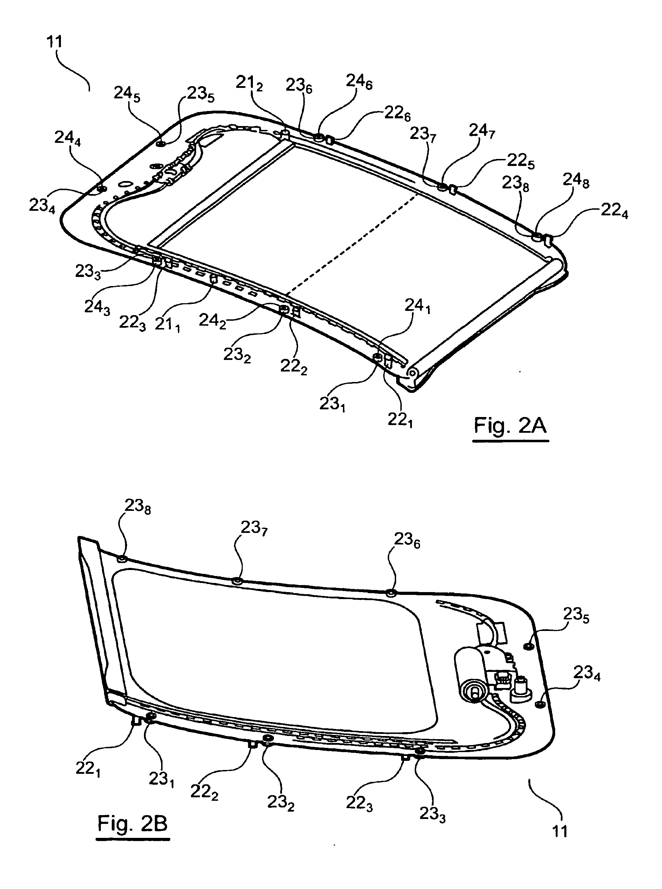

On présente, en relation avec les figures 2A (vue de dessus) et 2B (vue de dessous), un mode de réalisation de l'assemblage du dispositif à la structure de garniture. Dans ce mode de réalisation, le nombre de points de fixation du cadre sur le châssis est réduit à la quantité minimale nécessaire pour assurer une fixation mécanique correcte du cadre au châssis.

Le positionnement est réalisé au moyen de deux plots de centrage 21₁, 21₂ encastrés dans le cadre. Ces plots sont destinés à être insérés dans des pièces solidaires du châssis et de formes ajustées de façon à permettre le centrage du dispositif par rapport à la vitre.

Le maintien du cadre sur le châssis est réalisé en insérant six crochets de clippage 22₁, 22₂, 22₃, 22₄, 22₅, 22₆, prévus à cet effet, dans des formes correspondantes sur le châssis. Cette opération effectuée, il devient alors aisé d'assembler définitivement le dispositif au châssis. Huit fûts de fixation 23₁, 23₂, 23₃, 23₄, 23₅, 23₆, 23₇, 23₈ destinés au passage des vis d'assemblage sont répartis régulièrement sur le pourtour du cadre 11. Des bagues en acier (24₁ à 24₈) sont placées sur la partie arasée des fûts entre le cadre et le châssis pour éviter le phénomène de fluage. L'assemblage réalisé assure donc un maintien rigide du cadre, limitant les déformations.

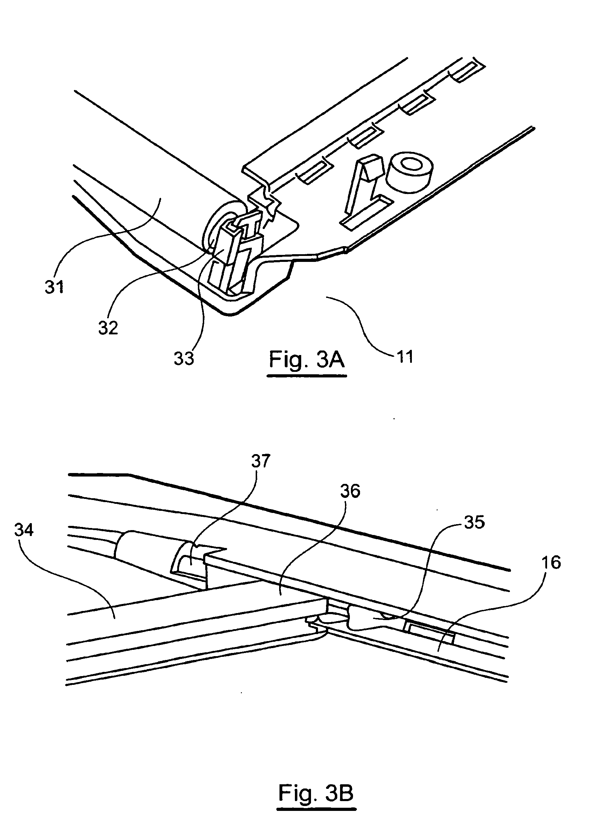

On présente figure 3A le détail du système de montage du tube 31 du store à enrouleur sur le cadre 11. Chaque extrémité ou tête du tube à enrouleur 32 est posée sur un palier. Avantageusement les paliers sont des coussinets ou des bagues autolubrifiées, obtenus par frittage de particules de métaux non ferreux. Les logements 33 de ces paliers sont clippés sur le cadre 11.

Le détail du mécanisme de coulissement de la barre de tirage 34 de la toile du store à enrouleur, en relation avec la figure 1, est illustré figure 3B. Cette barre de tirage 34 présente une flexibilité selon sa direction principale de façon à adopter la courbure du vitrage et est articulée avec des patins 35 permettant son coulissement dans les rails de guidage 16. Elle est de longueur développée supérieure à l'espacement entre les deux chemins de rail parallèles 16. Les patins 35 sont de forme adaptée aux rails de guidage de façon à ce que l'angle formé par l'extrémité de la barre 36 avec l'horizontale soit de valeur non nulle et permette de cintrer la barre de guidage.

Un câble 37 est relié au patin 35 pour permettre le mouvement de l'extrémité de la barre de tirage 36. Le câble 37 est par exemple de marque TELEFLEX®, revêtu d'un film thermoplastique (polytétrafluoroéthylène (PTFE), ...) et comprend un embout surmoulé lié aux moyens conventionnels permettant de tirer ou pousser le câble.

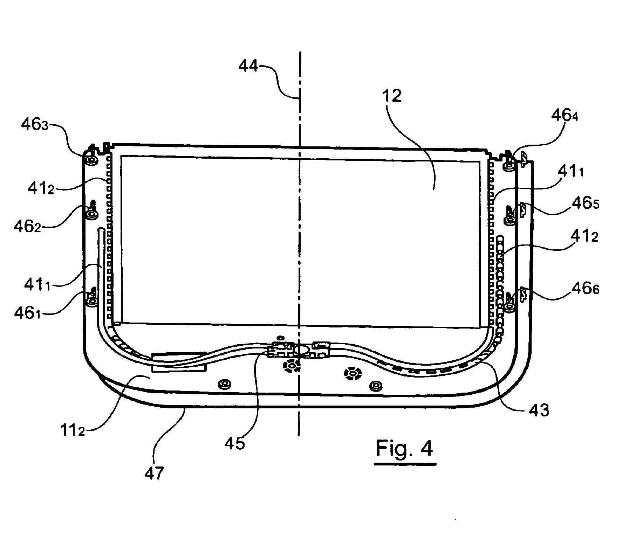

La figure 4 illustre un mode de réalisation préférentiel d'un passage de câble d'entraînement, encore appelé chemin ou gaine de câble d'entraînement, 41₁, 41₂ intégré au cadre. Ce chemin de câble est conçu de façon à permettre un maintien et un guidage correct du câble 37 tout en réduisant la masse du cadre. Il se compose d'un passage cylindrique délimité par des formes 43, encore appelées languettes ou pattes, incurvées selon le rayon de courbure interne du passage. Les languettes 43 sont de largeur sensiblement équivalente au diamètre du passage cylindrique et sont disposées alternativement de chaque côté du chemin de câble.

Bien entendu de nombreux autres types de conception peuvent être envisagés pour réaliser le chemin de câble, sans sortir du cadre de l'invention. Ces différentes solutions peuvent différer en forme et en nombre notamment.

Chaque chemin de câble s'étend préférentiellement suivant une forme générale en «U» à deux branches de longueurs différentes de part et d'autre de la fenêtre 12 du cadre. Les chemins de câble sont disposés de manière symétrique par rapport à l'axe de symétrie 44 du cadre.

Le moyen conventionnel 45 pour tirer et pousser ces câbles, solidaire du moteur électrique 14, est fixé sur le côté 11₂ du cadre sensiblement au voisinage de l'axe 44. Il peut être envisagé de nombreuses variantes à ce moyen. Par exemple l'entraînement coordonné des câbles peut être mis en oeuvre au moyen d'un mécanisme comprenant un axe fixe autour duquel est enroulée la seconde extrémité des câbles et un dispositif à deux crémaillères à déplacements opposés qui réalise l'allongement ou réciproquement le raccourcissement de la longueur déroulée des câbles.

Six réservations 46₁, 46₂, 46₃, 46₄, 46₅, 46₆, sous la forme de cheminées de réception de crochet de clippage permettent de fixer aisément un cadre d'habillage 47 au cadre 11 du dispositif. D'autres formes et d'autres moyens de fixation du cadre d'habillage au cadre 11 sont bien sûr envisageables. Ceux-ci peuvent varier, en forme et en nombre notamment.

D'autre part, les modes et les variantes de réalisation suivants sont envisageables dans le cadre de l'invention, sans que cela constitue néanmoins une liste exhaustive :
- le matériau du cadre 11 est de type SMC (en anglais « Sheet Molding Compound », pour préimprégné en feuilles) et est obtenu par un procédé de moulage par compression ;
- Le cadre 11 comprend des moyens de fixation de dispositifs d'éclairage de l'habitacle du véhicule ;
- Les surfaces de la face supérieure du cadre 11 visibles au travers de l'élément vitré du pavillon sont dissimulées, par exemple, par de la sérigraphie rapportée sur l'élément vitré.

## Revendications

1. Dispositif d'occultation d'un pavillon vitré d'un véhicule automobile, comprenant au moins un store à enrouleur (13) entraîné par un moteur électrique (14),
le dispositif comprenant un cadre monobloc (11) destiné à être solidarisé au châssis dudit véhicule et présentant des moyens de fixation dudit store à enrouleur et dudit moteur, de façon à être solidarisé pré-équipé audit châssis,
**caractérisé en ce que** ledit cadre (11) présente au moins un crochet de clippage (22₁) pour le maintien temporaire dudit cadre sous ledit pavillon, au moins un plot de centrage (21₁) facilitant la mise en place dudit dispositif dans ledit véhicule, et au moins un fût de fixation (23₁) permettant le passage d'une vis, le ou lesdits fûts de fixation (23₁) étant équipés d'une bague anti-fluage (24₁).

2. Dispositif d'occultation selon la revendication 1, **caractérisé en ce que** ledit cadre (11) présente au moins un passage de câble d'entraînement (41₁) actionné par ledit moteur (14).

3. Dispositif d'occultation selon la revendication 2, **caractérisé en ce que** le ou lesdits passages comprennent chacun un réceptacle comprenant des formes (43) disposées alternativement de chaque côté dudit réceptacle.

4. Dispositif d'occultation selon l'une quelconque des revendications 1 à 3, **caractérisé en ce que** ledit cadre (11) présente deux rails de guidage (16) d'une barre de tirage (34) entraînant la toile dudit store.

5. Dispositif d'occultation selon l'une quelconque des revendications 1 à 4, **caractérisé en ce que** ledit cadre (11) est réalisé par moulage.

6. Dispositif d'occultation selon l'une quelconque des revendications 1 à 5, **caractérisé en ce que** ledit cadre (11) présente au moins une cheminée de réception d'un crochet de clippage (46₁) d'une pièce d'habillage (47).

7. Procédé de montage d'un dispositif d'occultation d'un pavillon vitré d'un véhicule automobile selon la revendication 1, comprenant au moins un store à enrouleur (13) entraîné par un moteur électrique (14), **caractérisé en ce qu'**il comprend au moins les deux étapes :
- assemblage dudit moteur (14) et dudit store à enrouleur (13) sur ledit cadre monobloc (11), de façon à obtenir un dispositif d'occultation pré-équipé ;
- assemblage au châssis dudit véhicule dudit dispositif d'occultation pré-équipé comprenant :
- une mise en place dudit dispositif d'occultation dans ledit véhicule à l'aide d'au moins un plot de centrage (21) présent sur ledit cadre ;
- un maintien temporaire dudit cadre (11) sous ledit pavillon à l'aide d'au moins un crochet de clippage (22₁) présent sur ledit cadre ;
- un vissage dudit cadre (11) sur ledit châssis, à l'aide d'au moins une vis traversant un fût de fixation prévu à cet effet sur ledit cadre, ledit fût de fixation (23₁) étant équipé d'une bague anti-fluage (24₁).

8. Véhicule automobile à pavillon vitré, comprenant un dispositif d'occultation dudit pavillon vitré, comprenant au moins un store à enrouleur (13) entraîné par un moteur électrique (14),
ledit dispositif d'occultation comprenant un cadre monobloc (11) destiné à être solidarisé au châssis dudit véhicule et portant des moyens de fixation dudit store à enrouleur et dudit moteur, de façon à être solidarisé pré-équipé audit châssis,
**caractérisé en ce que** ledit cadre (11) présente au moins un crochet de clippage (22₁) pour le maintien temporaire dudit cadre sous ledit pavillon, au moins un plot de centrage (21₁) facilitant la mise en place dudit dispositif dans ledit véhicule, et au moins un fût de fixation (23₁) permettant le passage d'une vis, le ou lesdits fûts de fixation (23₁) étant équipés d'une bague anti-fluage (24₁).

## Patentansprüche

1. Abdeckvorrichtung eines verglasten Daches eines Kraftfahrzeugs, welche mindestens ein von einem elektrischen Motor (14) angetriebenes Fensterrollo (13) umfasst, wobei die Vorrichtung einen einstückigen Rahmen (11) umfasst, welcher dazu bestimmt ist, mit dem Chassis des Fahrzeugs verbunden zu werden, und welcher Fixiermittel des Fensterrollos und des Motors derart aufweist, dass er vorbestückt mit dem Chassis verbunden werden kann,
**dadurch gekennzeichnet, dass** der Rahmen (11) mindestens ein Clipverbindungsmittel (22₁) für das zeitweilige Halten des Rahmens unter dem Dach, mindestens ein die Ausrichtung der Vorrichtung in dem Fahrzeug erleichterndes Zentriermittel (21₁), und mindestens einen die Durchführung einer Schraube ermöglichenden Fixierzylinder (23₁) aufweist, wobei der oder die Fixierzylinder (23₁) mit einem Antikriechring (24₁) versehen sind.

2. Abdeckvorrichtung nach Anspruch 1, **dadurch gekennzeichnet, dass** der Rahmen (11) zumindest einen Durchlass für ein von dem Motor (14) betätigtes Antriebskabel (41₁) aufweist.

3. Abdeckvorrichtung nach Anspruch 2, **dadurch gekennzeichnet, dass** der oder die Durchlässe jeweils eine Aufnahme umfassen, welche wechselseitig der Aufnahme angeordnete Formen (43) umfasst.

4. Abdeckvorrichtung nach einem der Ansprüche 1 bis 3, **dadurch gekennzeichnet, dass** der Rahmen (11) zwei Führungsschienen (16) einer die Bahn des Rollos antreibenden Zugstange (34) aufweist.

5. Abdeckvorrichtung nach einem der Ansprüche 1 bis 4, **dadurch gekennzeichnet, dass** der Rahmen (11) durch Abformen gebildet ist.

6. Abdeckvorrichtung nach einem der Ansprüche 1 bis 6, **dadurch gekennzeichnet, dass** der Rahmen (11) zumindest einen Aufnahmeraum eines Clipverbindungsmittels (46₁) eines Verkleidungsteils (47) aufweist.

7. Verfahren zum Zusammenbau einer Abdeckvorrichtung eines verglasten Daches eines Kraftfahrzeugs nach Anspruch 1, wobei die Abdeckvorrichtung mindestens ein von einem elektrischen Motor (14) angetriebenes Fensterrollo (13) umfasst,
**dadurch gekennzeichnet, dass** das Verfahren zumindest die beiden folgenden Schritte umfasst:
- Montieren des Motors (14) und des Fensterrollos (13) auf dem einstückigen Rahmen (11) derart, dass eine vorbestückte Abdeckvorrichtung erhalten wird;
- Montieren der vorbestückten Abdeckvorrichtung an das Chassis des Fahrzeugs, wobei das Montieren umfasst:
- ein Ausrichten der Abdeckvorrichtung in dem Fahrzeug mit Hilfe mindestens eines auf dem Rahmen vorhandenen Zentriermittels (21);
- ein zeitweiliges Halten des Rahmens (11) unter dem verglasten Dach mit Hilfe mindestens eines auf dem Rahmen vorhandenen Clipverbindungsmittels (22₁);
- ein Verschrauben des Rahmens (11) auf dem Chassis mit Hilfe mindestens einer Schraube, welche durch einen für diesen Zweck auf dem Rahmen vorgesehenen Fixierzylinder geführt wird, wobei der oder die Fixierzylinder (23₁) mit einem Antikriechring (24₁) versehen sind.

8. Kraftfahrzeug mit verglastem Dach, welches eine Abdeckvorrichtung des verglasten Daches umfasst, und welches mindestens ein von einem elektrischen Motor (14) angetriebenes Fensterrollo (13) umfasst, wobei die Abdeckvorrichtung einen einstückigen Rahmen (11) umfasst, welcher dazu bestimmt ist, mit dem Chassis des Fahrzeugs verbunden zu werden, und welcher Fixiermittel des Fensterrollos und des Motors derart trägt, dass er vorbestückt mit dem Chassis verbunden werden kann,
**dadurch gekennzeichnet, dass** der Rahmen (11) mindestens ein Clipverbindungsmittel (22₁) für das zeitweilige Halten des Rahmens unter dem Dach, mindestens ein die Ausrichtung der Vorrichtung in dem Fahrzeug erleichterndes Zentriermittel (21₁) und mindestens einen die Durchführung einer Schraube ermöglichenden Fixierzylinder (23₁) aufweist, wobei der oder die Fixierzylinder (23₁) mit einem Antikriechring (24₁) versehen sind.

## Claims

1. Device for screening a glazed roof of a motor vehicle, comprising at least one roller blind (13) driven by an electric motor (14),
the device comprising a one-piece frame (11) which is intended to be interlocked with the chassis of the said vehicle and has means for fixing the said roller blind and the said motor, so as to be interlocked with the said chassis in pre-equipped form,
**characterised in that** the frame (11) has at least one clipping hook (22₁) for temporarily holding the said frame in position under the said roof, at least one centring stud (21₁) which facilitates the placing of the said device in position in the said vehicle, and at least one fixing post (23₁) which permits the passage of a screw,the fixing post or posts (23₁) is/are equipped with an anti-creep ring (24₁).

2. Screening device according to claim 1, **characterised in that** the said frame (11) has at least one passage (41₁) for a driving cable which is actuated by the said motor (14).

3. Screening device according to claim 2, **characterised in that** the said passage or passages each comprise a receptacle comprising shapes (43) which are disposed on each side of the said receptacle alternately.

4. Device according to any of claims 1 to 3, **characterised in that** the said frame (11) has two guide rails (16) for a drawbar (34) which drives the cloth of the said blind.

5. Screening device according to any of claims 1 to 4, **characterised in that** the said frame (11) is produced by moulding.

6. Screening device according to any of claims 1 to 5, **characterised in that** the said frame (11) has at least one shaft for receiving a clipping hook (46₁) belonging to a trimming part (47).

7. Method of mounting a device for screening a glazed roof of a motor vehicle according to claim 1, comprising at least one roller blind (13) driven by an electric motor (14), **characterised in that** it comprises at least the two stages:
- the fitting of the said motor (14) and the said roller blind (13) onto to the said one-piece frame (11) in such a way as to obtain a pre-equipped screening device;
- the fitting, to the chassis of the said vehicle, of the said pre-equipped screening device, said fitting operation comprising:
- the placing in position of the said screening device in the said vehicle with the aid of at least one centring stud (21) which is present on the said frame;
- the temporary holding of the said frame (11) in position under the said roof with the aid of at least one clipping hook (22₁) which is present on the said frame;
- the screwing of the said frame (11) onto the said chassis with the aid of at least one screw passing through a fixing post provided for that purpose on the said frame, said fixing post (23₁) is equipped with an anti-creep ring (24₁).

8. Motor vehicle with a glazed roof, comprising a device for screening the said glazed roof, comprising at least one roller blind (13) driven by an electric motor (14),
the said screening device comprising a one-piece frame (11) which is intended to be interlocked with the chassis of the said vehicle and has means for fixing the said roller blind and the said motor, so as to be interlocked with the said chassis in pre-equipped form,
**characterised in that** the said frame (11) has at least one clipping hook (22₁) for temporarily holding the said frame in position under the said roof, at least one centring stud (21₁) which facilitates the placing of the said device in position in the said vehicle, and at least one fixing post (23₁) which permits the passage of a screw, said fixing post or posts (23₁) is/are equipped with an anti-creep ring (24₁).
